# EUROPÄISCHE PATENTANMELDUNG

(11) **EP 2 644 311 A1**
(43) Veröffentlichungstag der Anmeldung: **02.10.2013**
(21) Anmeldenummer: 12305353.0
(22) Anmeldetag: 27.03.2012
(51) Int. Cl.: B23K 26/42, B23K 26/32, B23K 26/18

(54) **Verfahren zum Schweißen mittels eines Lasers**

(71) Anmelder: Nexans, 75008 Paris (FR)
(72) Erfinder: Egerer, Ralf, 38723 Seesen (DE); Schulz, Holger, 30167 Hannover (DE); Petersen, Olaf, 30173 Hannover (DE); Reiter, Christian, 31157 Sarstedt (DE)
(74) Vertreter: Döring, Roger

(57) **Zusammenfassung**

Es wird ein Verfahren zum Verschweißen von aneinander liegenden Kanten mindestens eines Werkstücks aus Metall mittels eines Lasers angegeben, bei welchem die an den Kanten liegenden Bereiche des Werkstücks zur Erhöhung der Absorptionsfähigkeit des Lichts des Lasers einer Vorbehandlung unterzogen werden. Dazu wird zunächst auf die an den Kanten liegenden Bereiche des Werkstücks Farbe aufgesprüht bzw. aufgespritzt, unter Vermeidung jeglicher mechanischer Berührung des Werkstücks durch ein die Farbe abgebendes Gerät (7), und die Kanten des Werkstücks werden danach mittels eines Lasers (11) miteinander verschweißt.

## Beschreibung

Die Erfindung bezieht sich auf ein Verfahren zum Verschweißen von aneinander liegenden Kanten mindestens eines Werkstücks aus Metall mittels eines Lasers, bei welchem die an den Kanten liegenden Bereiche des Werkstücks zur Erhöhung der Absorptionsfähigkeit des Lichts des Lasers einer Vorbehandlung unterzogen werden (EP 1 184 128 B1).

Das Werkstück besteht in bevorzugter Ausführungsform aus Kupfer oder Aluminium oder einer Legierung dieser Materialien, wobei insbesondere das Aluminium auch mit einem Polymer beschichtet sein kann. An den zu verschweißenden Kanten können zwei vorher voneinander getrennte Werkstücke aneinander liegen, beispielsweise zwei Bänder, die an ihren Stirnseiten miteinander verschweißt werden sollen. Es kann sich aber auch um nur ein Band handeln, das in bekannter Technik längseinlaufend so zu einem Rohr geformt wird, daß seine beiden Kanten an einem in Längsrichtung verlaufenden Schlitz auf Stoß aneinander liegen. In der folgenden Beschreibung wird - stellvertretend für alle möglichen zu verschweißenden Werkstücke - als Werkstück ein zu einem Rohr gebogenes Band berücksichtigt, das zur Erzeugung eines rundum geschlossenen Rohres an seinen Kanten mittels eines Lasers verschweißt wird.

Das Verschweißen der an einem Schlitz aneinander liegenden Kanten eines Bandes aus Metall mittels eines Lasers ist an sich aus der EP 0 703 017 B1 bekannt. Dabei hat sich ergeben, daß die Absorption des Laserlichts durch das Metall sehr gering und von der Wellenlänge der Laserstrahlung abhängig ist. Ein großer Teil der Laserenergie wird an der Oberfläche eines Bandes aus Metall reflektiert. Das hat zur Folge, daß sehr viel Energie aufgewendet werden muß, um das Metall für den Schweißvorgang aufzuschmelzen.

In der EP 1 714 729 B1 wird ein Verfahren mit zugehöriger Vorrichtung zum Laserschweißen beschrieben, bei dem ein YAG-Laser und ein Laser mit niedrigerer Wellenlänge gepulst auf eine Schweißzone einwirken. Aus der DE 10 2004 027 229 B4 geht ein Verfahren zum Schweißen von Werkstücken aus Aluminium oder einer Aluminiumlegierung hervor, bei dem neben einem Schweißlaser ein zweiter gepulster Laser verwendet wird, durch welchen zunächst eine Oxidschicht des Aluminiums verdampft wird. Bei beiden bekannten Verfahren werden zwei Laser eingesetzt, die während des Schweißvorgangs gleichzeitig auf die Schweißzone einwirken.

Die eingangs erwähnte EP 1 184 128 B1 beschreibt ein Verfahren zur Herstellung eines Rohres aus Kupfer, bei dem ein Kupferband längseinlaufend zu einem Rohr mit einem in Längsrichtung verlaufenden Schlitz geformt wird. Die am Schlitz liegenden Kanten des Kupferbandes werden mittels eins Lasers miteinander verschweißt. Vor dem Schweißvorgang werden die Bereiche der Kanten des Kupferbandes mechanisch aufgerauht und beispielsweise mit Petroleum benetzt. Zum Aufrauhen des Kupferbandes werden beispielsweise Prägerollen verwendet, durch welche die Oberfläche desselben mechanisch verändert wird. Das Petroleum wird in einer Benetzungsstation mittels Filzstreifen aufgetragen, welche einem Verschleiß unterliegen.

Der Erfindung liegt die Aufgabe zugrunde, das eingangs geschilderte Verfahren weiter zu verbessern, insbesondere zu vereinfachen.

Diese Aufgabe wird gemäß der Erfindung dadurch gelöst,
- daß zunächst auf die an den Kanten liegenden Bereiche des Rohres Farbe aufgesprüht bzw. aufgespritzt wird, unter Vermeidung jeglicher mechanischer Berührung des Werkstücks durch ein die Farbe abgebendes Gerät, und
- daß die Kanten des Rohres danach mittels eines Lasers miteinander verschweißt werden.

Die Farbe, bei welcher es sich in bevorzugter Ausführungsform um schwarze Farbe handelt, wird bei diesem Verfahren mit einem Gerät auf die Kanten des Rohres aufgetragen, welches das Rohr nicht berührt bzw. welches von dem Metallband, aus dem das Rohr geformt wird, nicht berührt wird. Das Gerät - eine Sprühvorrichtung bzw. Spritzvorrichtung - erfährt also während der Durchführung keinerlei Verschleiß, so daß es zeitlich nahezu unbegrenzt eingesetzt werden kann. Durch die Farbe wird die Oberfläche der Bereiche an den miteinander zu verschweißenden Kanten des Rohres derart aufbereitet, daß die Absorption von Laserlicht in diesen Bereichen wesentlich verbessert wird. Für den Schweißvorgang zum Verschweißen der beiden Kanten des Rohres miteinander kann daher ein Laser mit vermindertem Energiebedarf eingesetzt werden. Das Verfahren hat den weiteren Vorteil, daß die beiden Verfahrensschritte - Aufbringen der Farbe einerseits und Schweißen andererseits - örtlich und zeitlich getrennt voneinander durchgeführt werden können. Die Farbe kann dann mit Vorteil bereits auf das noch nicht zu einem Rohr geformten Metallband aufgebracht werden. Die Formung zu einem Schlitzrohr und das Verschweißen des Schlitzes mittels des Lasers können danach zu einem beliebigen Zeitpunkt vorgenommen werden.

Das Verfahren nach der Erfindung wird anhand der Zeichnungen in Ausführungsbeispielen erläutert.

Es zeigen:
Fig. 1 in schematischer Darstellung eine Vorrichtung zur Herstellung eines Rohres.
Fig. 2 einen Schnitt durch Fig. 1 entlang der Linie II in vergrößerter Darstellung.
Fig. 3 eine Draufsicht auf Fig. 2 in weiter vergrößerter Darstellung.
Fig. 4 eine Ansicht eines Metallbandes in einem Ausschnitt.
Fig. 5 eine gegen gegenüber Fig. 1 abgewandelte Ausführungsform einer Vorrichtung zur Herstellung eines Rohres.

Als Laser, mit dem die Kanten des Rohres miteinander verschweißt werden, kann beispielsweise ein Laser mit einer Wellenlänge von mindestens 800 nm verwendet werden. Mit Vorteil wird ein YAG-Laser eingesetzt, dessen Wellenlänge beispielsweise bei 1064 nm liegt. Es können aber auch andere Festkörperlaser und Diodenlaser verwendet werden, deren Wellenlängen beispielsweise zwischen 808 nm und 1070 nm liegen. Auch der Einsatz eines CO₂-Lasers mit einer Wellenlänge von 10.600 nm ist möglich.

Das Metallband besteht in bevorzugten Ausführungsformen aus Kupfer oder Aluminium oder Legierungen dieser Materialien. Es wird im folgenden kurz als "Band" bezeichnet. Ebenfalls in bevorzugter Ausführungsform wird auf das Band schwarze Farbe aufgesprüht bzw. aufgespritzt, und zwar mit Vorteil als geschlossene Schichten. Diese Schichten können eine beispielsweise zwischen 0,5 µm und 100 µm liegende Dicke haben.

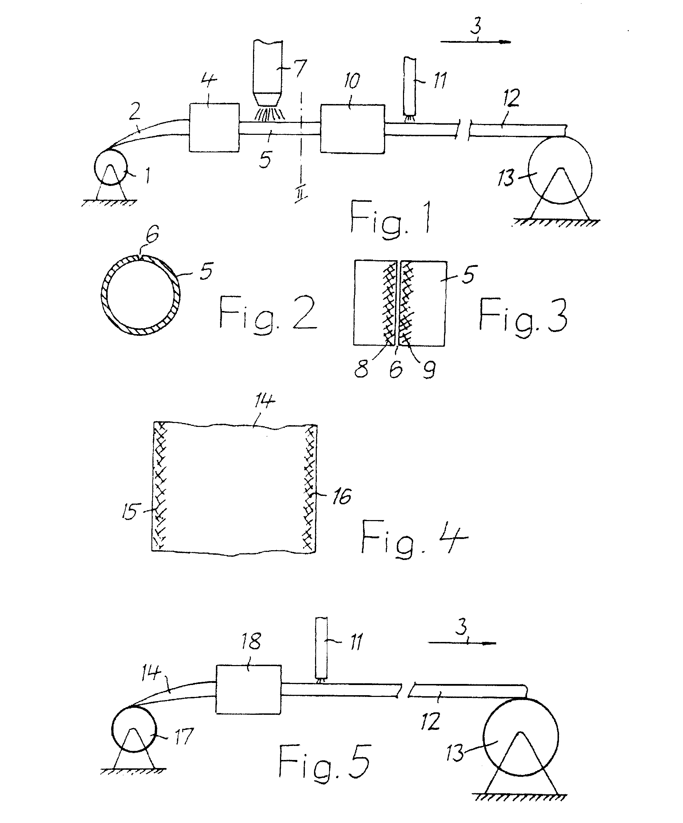

Das Verfahren nach der Erfindung wird beispielhaft zunächst anhand von Fig. 1 erläutert:

Von einer Spule 1 wird ein Band 2 mittels einer der Einfachheit halber nicht mit dargestellten, grundsätzlich bekannten Abzugseinrichtung in Richtung des Pfeiles 3 abgezogen. Das Band 2 wird in einer ebenfalls bekannten Formungseinrichtung 4 zu einem Schlitzrohr 5 (Fig. 2) geformt, in dem die Kanten des Bandes 2 an einem in seiner Längsrichtung verlaufenden Schlitz 6 auf Stoß aneinander liegen.

Das Schlitzrohr 5 wird anschließend unter mindestens einem Gerät 7 hindurchgeführt bzw. an einem solchen Gerät entlang geführt, von dem auf die an den beiden Kanten liegenden Bereiche 8 und 9 des Bandes 2 einschließlich der Stirnseiten desselben zur Verbesserung der Absorptionsfähigkeit von Laserlicht Farbe aufgesprüht bzw. aufgespritzt wird. Danach kann das Schlitzrohr 5 eine Halteeinrichtung 10 durchlaufen, durch welche die Kanten des Bandes 2 weiter dicht aneinander liegend zusammengehalten werden. Der Schlitz 6 wird dann durch einen Laser 11 verschweißt. Das fertige Rohr 12 kann abschließend auf eine Spule 13 aufgewickelt werden.

Auf die Bereiche 8 und 9 des Bandes 2 kann, so wie beschrieben, an dem bereits zum Schlitzrohr 5 geformten Band 2 durch das mindestens eine Gerät 7 Farbe aufgetragen werden. Das könnte aber auch an dem noch offenen Rohr bereits vor der Formungseinrichtung 4 oder auch im Bereich derselben durchgeführt werden. In diesen beiden Fällen kann auf die Halteeinrichtung 10 verzichtet werden. Eine Halteeinrichtung könnte dann aber auch hinter dem Laser 11 angeordnet werden. Auftragen von Farbe auf das Band 2 durch das mindestens eine Gerät 7 und Verschweißen des Schlitzes 6 durch den Laser 11 erfolgen in allen geschilderten Fällen in einem Arbeitsgang.

Die beiden im geschilderten Verfahren durchgeführten Verfahrensschritte können auch örtlich und zeitlich getrennt voneinander durchgeführt werden. Dazu kann gemäß Fig. 4 auf ein als ebenes Band vorliegendes Band 14 an seinen beiden Kanten einschließlich der Stirnseiten derselben zur Bildung von Bereichen 15 und 16 verbesserter Absorptionsfähigkeit von Laserlicht mittels eines dem Gerät 7 entsprechenden Geräts Farbe aufgetragen werden. Das Band 14 ist dann an seinen miteinander zu verschweißenden Kanten so vorbehandelt, daß es Laserlicht verbessert absorbieren kann. Es kann in dieser Form auf eine Spule aufgewickelt werden.

Die das vorbehandelte Band 14 tragende Spule ist in Fig. 5 mit 17 bezeichnet. Das Band 14 wird von der Spule 17 abgezogen und in einer Vorrichtung nach Fig. 5 in einer der Formungseinrichtung 4 nach Fig. 1 entsprechenden Formungseinrichtung 18 zu einem dem Schlitzrohr 5 entsprechenden Schlitzrohr geformt. Dessen Schlitz wird direkt hinter der Formungseinrichtung 18 mittels des Lasers 11 zu dem geschlossenen Rohr 12 verschweißt, das auf die Spule 13 aufgewickelt werden kann.

Das im Vorangehenden für die Herstellung eines Rohres beschriebene Verfahren ist analog dazu auch für zwei Metallbänder einsetzbar, die an ihren Stirnseiten miteinander verschweißt werden sollen.

## Patentansprüche

1. Verfahren zum Verschweißen von aneinander liegenden Kanten mindestens eines Werkstücks aus Metall mittels eines Lasers, bei welchem die an den Kanten liegenden Bereiche des Werkstücks zur Erhöhung der Absorptionsfähigkeit des Lichts des Lasers einer Vorbehandlung unterzogen werden, **dadurch gekennzeichnet,**
- **daß** zunächst auf die an den Kanten liegenden Bereiche des Werkstücks Farbe aufgesprüht bzw. aufgespritzt wird, unter Vermeidung jeglicher mechanischer Berührung des Werkstücks durch ein die Farbe abgebendes Gerät (7), und
- **daß** die Kanten des Werkstücks danach mittels eines Lasers (11) miteinander verschweißt werden.

2. Verfahren nach Anspruch 1, **dadurch gekennzeichnet,**
- **daß** als Werkstück ein aus Metall bestehendes Band (2) längseinlaufend zu einem Rohr (5) mit einem in seiner Längsrichtung verlaufenden Schlitz (6) geformt wird, an dem die Kanten des Bandes aneinander liegen,
- **daß** auf das Band in den Bereichen der Kanten auf beiden Seiten des Schlitzes (6) Farbe aufgesprüht bzw. aufgespritzt wird und
- **daß** Kanten des Rohres mittels eines Lasers (11) verschweißt werden.

3. Verfahren nach Anspruch 1, **dadurch gekennzeichnet,**
- **daß** zwei Kanten aufweisende Werkstücke mit ihren Kanten aneinander gelegt werden,
- **daß** die Bereiche an den Kanten beider Werkstücke mit Farbe besprüht bzw. bespritzt werden und
- **daß** die Kanten der beiden Werkstücke mittels eines Lasers miteinander verschweißt werden.

4. Verfahren nach einem der Ansprüche 1 bis 3, **dadurch gekennzeichnet, daß** als Farbe schwarze Farbe verwendet wird.

## Geänderte Patentansprüche

### Geänderte Patentansprüche gemäss Regel 137(2) EPÜ.

**1.** Verfahren zum Verschweißen von aneinander liegenden Katen mindestens eines Werkstücks aus Metall mittels eines Lasers, bei welchem auf die an den Kanten liegenden Bereiche des Werkstücks zur Erhöhung der Absorptionsfähigkeit des Lichts des Lasers unter Vermeidung jeglichermechanischer Berührung zusätzliches Materialaufgebracht wird und mit welchem die Kanten des Werkstücks danach mittels eines Lasers miteinander verscheißt werden, **dadurch gekennzeichnet, daß** als zusätzliches Material Farbe verwendet wird, die mittels eines Farbe abgebenden Geräts als Schichten mit einerzwischen 0,5 µm und 100 µm liegenden Schichtdicke auf das Werkstück aufgesprüht bzw. aufgespritzt wird.

**2.** Verfahren nach Anspruch 1, **dadurch gekennzeichnet.**
- **daß** als Werkstückein aus Metal lbestehendes Band (2) längseinlaufend zu einem Rohr (5) mit einem in seiner Längsrichtung verlaufenden Schlitz (6) geformt wird, an dem die Kanten des Bandes aneinander liegen,
- **daß** auf das Band in den Bereichen der Kanten auf beiden Seiten des Schlitzes (6) Farbe aufgesprüht bzw. aufgespritzt wird und
- **daß** die Kanten des Rohres mittels eines Lasers (11) verschweißt werden.

**3.** Verfahren nach Anspruch 1, **dadurch gekennzeichnet,**
- **daß** zwei Kanten aufweisende Werkstücke mit ihren Kanten aneinander gelegt weiden,
- **daß** die Bereiche an den Kanten beider Werkstücke mit Farbe besprüht bzw. bespritzt werden und
- **daß** die Kanten derbeiden Werkstücke mittels eines Lasers miteinander verschweißt werden.

**4.** Verfahren nach einem der Ansprüche 1 bis 3, **dadurch gekennzeichnet, daß** als Farbe schwarze Farbe verwendet wird.
